Europäisches Patentamt

(19) **European Patent Office**

Office européen des brevets

(11) Numéro de publication: **0 083 546**
**B1**

(12) # FASCICULE DE BREVET EUROPEEN

(45) Date de publication du fascicule du brevet:
**14.08.85**

(51) Int. Cl.⁴: **G 21 D 3/04,** G 21 D 3/10

(21) Numéro de dépôt: **82402400.4**

(22) Date de dépôt: **30.12.82**

(54) **Procédé de surveillance d'une centrale de production d'électricité équipée d'un réacteur nucléaire.**

(30) Priorité: **31.12.81 FR 8124594**

(43) Date de publication de la demande:
**13.07.83 Bulletin 83/28**

(45) Mention de la délivrance du brevet:
**14.08.85 Bulletin 85/33**

(84) Etats contractants désignés:
**BE CH DE FR GB IT LI SE**

(56) Documents cités:
**GB - A - 1 020 481**
**GB - A - 2 041 605**
**US - A - 4 236 220**
**US - A - 4 263 654**

**ELECTRICAL WORLD, vol. 161, no. 22, 1 juin 1964, pages 49-51,145, Pittsburgh, Pa., US, R. EASTMAN et al.: "PWR Plant has conventional controls"**
**PROCEEDINGS IEE, vol. 115, no. 12, decembre 1968, New York, US, D. PATTERSON: "Application of a computerised alarm-analysis system to a nuclear power station"**

(73) Titulaire: **FRAMATOME ET CIE., Tour Fiat 1, Place de la Coupole, F-92400 Courbevoie (FR)**

(72) Inventeur: **Le Rat, Guy, 10 cours des Petites Ecuries Lognes, F-77200 Torcy (FR)**

(74) Mandataire: **Lavoix, Jean et al, c/o Cabinet Lavoix 2, Place D'Estienne D'Orves, F-75441 Paris Cedex 09 (FR)**

## Description

L'invention concerne un procédé de surveillance d'une centrale de production d'électricité équipée d'un réacteur nucléaire.

Dans de telles centrales de production d'énergie, par exemple les centrales nucléaires comportant un réacteur nucléaire à eau sous pression, on recueille en continu des informations quantitatives ou qualitatives concernant le fonctionnement ou l'état des différents composants de la centrale. Ces informations, généralement appelées «paramètres», sont comparées à des données de référence correspondant à un fonctionnement normal de la centrale et donnent lieu, en cas d'une différence significative entre un paramètre et une donnée de référence, à un signal ou une alarme en salle de commande de la centrale.

Ces signaux ou alarmes doivent être pris en compte par un opérateur qui doit éventuellement intervenir pour éviter une évolution dangereuse de l'état de la centrale ou l'apparition d'un incident ou d'un accident nécessitant la mise en œuvre d'actions adaptées.

Un tel système de surveillance rend cependant la tâche de l'opérateur relativement complexe, dans certaines circonstances.

C'est ainsi que, lors de l'apparition d'un incident ou d'un accident sur la centrale, l'opérateur se trouve confronté à une très grande quantité d'alarmes qu'il est difficile d'exploiter en un temps très court. Cela se produit, par exemple, après un arrêt d'urgence ou après une phase d'injection de sécurité. Il est alors très difficile pour l'opérateur de distinguer le défaut qui est à l'origine de l'incident ayant provoqué l'arrêt d'urgence et/ou l'injection de sécurité.

On a donc proposé un système de surveillance où il était possible, par des interrogations successives, de remonter à la cause de l'incident en répertoriant toutes les relations de cause à effet entre les événements survenant dans la centrale.

Un tel processus conduit à l'utilisation de très grosses mémoires et de logiques complexes. Le temps requis pour les interrogations successives risque également d'interdire une intervention efficace et rapide de l'opérateur. En outre, on ne peut jamais être sûr d'avoir imaginé toutes les possibilités.

Le but de l'invention est donc de proposer un procédé de surveillance d'une centrale de production d'électricité équipée d'un réacteur nucléaire consistant à recueillir des informations quantitatives ou qualitatives appelées «paramètres» relatives au fonctionnement et à l'état des composants de la centrale, à comparer ces paramètres à des données de référence correspondant à un fonctionnement normal de la centrale et à signaler les différences existant entre les paramètres et les données de référence, ce procédé devant permettre à l'opérateur d'avoir une vision très rapide et très synthétique de l'état de la centrale, d'évaluer exactement la gravité et les risques d'une telle situation et d'intervenir d'une façon très rapide et très efficace.

Dans ce but, pour la mise en œuvre du procédé suivant l'invention:

— on définit un ensemble de situations prédéterminées correspondant aux différentes phases de fonctionnement ou d'arrêt du réacteur en fonction du niveau de la puissance dégagée par le cœur, des paramètres physiques du fluide primaire et de leur évolution dans le temps, ou des demandes d'actions relatives à la protection et à la sauvegarde du réacteur;

— on définit, à chaque instant, le type de fonctionnement du réacteur par son rattachement à l'une des situations prédéterminées;

— on regroupe les paramètres utiles sous la surveillance de la centrale en sous-ensembles appelés «fonctions» correspondant chacun aux paramètres et conditions relatifs à l'accomplissement d'une tâche particulière et indispensable dans la centrale;

— on détermine pour chacun des paramètres de chacune des fonctions son état suivant une catégorie prédéterminée décrivant son aptitude à concourir à l'accomplissement de la fonction dans la situation considérée et représentant un niveau de dégradation par rapport à un fonctionnement normal, suivant des spécifications prédéterminées;

— on attribue à chacune des fonctions considérées l'état le plus défavorable attribué à l'un au moins des paramètres de cette fonction;

— on détermine l'état global de la situation de la centrale comme l'état le plus défavorable attribué à l'une au moins des fonctions;

— on visualise les informations relatives à l'état global de la situation, à l'état de chacune des fonctions et à tout changement d'état d'une quelconque de ces fonctions.

Afin de bien faire comprendre l'invention, on va décrire à titre d'exemple non limitatif, en se référant aux figures jointes en annexe, un mode de réalisation du procédé de surveillance suivant l'invention, dans le cas d'une centrale équipée d'un réacteur nucléaire à eau sous pression.

La fig. 1 représente, de façon schématique, le réacteur nucléaire et les différents circuits nécessaires pour son fonctionnement et sa sécurité.

La fig. 2 représente le pupitre disposé en salle de commande permettant d'assurer la surveillance de la centrale.

La fig. 3 représente une vue agrandie du dispositif utilisé pour l'affichage de l'état de la situation et des fonctions.

La fig. 4 représente une vue agrandie du dispositif d'affichage des réacteurs d'une fonction ayant subi un changement d'état.

La fig. 5 représente une vue agrandie du dispositif utilisé pour l'affichage de l'état des réacteurs principaux de chacune des fonctions dans une situation particulière.

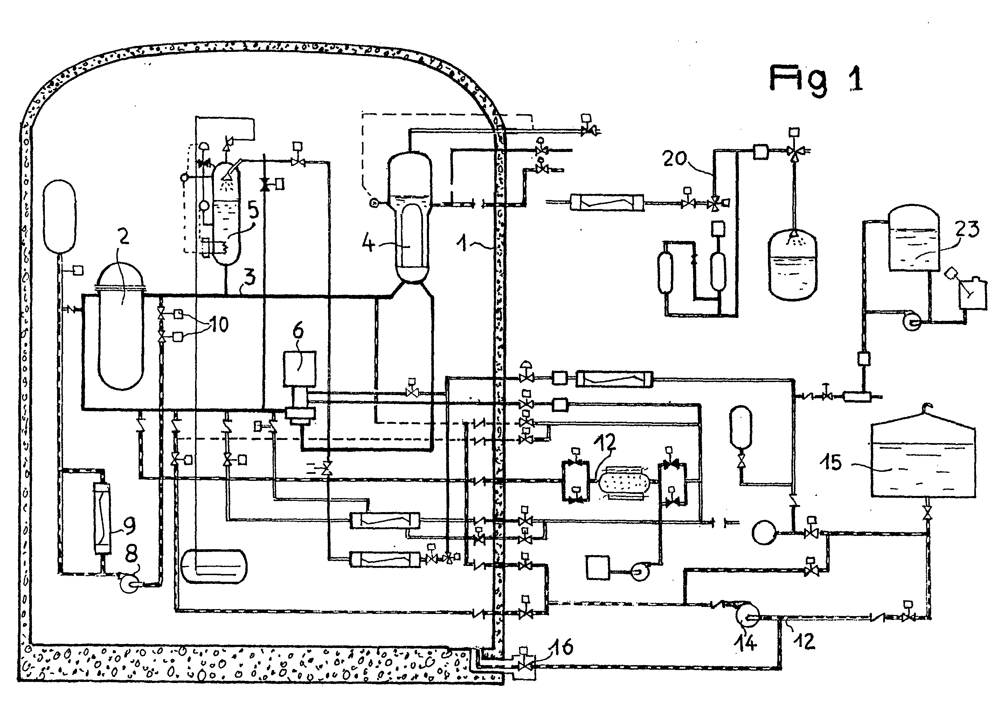

Sur la fig. 1, on voit l'enceinte de sécurité 1 d'un réacteur nucléaire à eau sous pression comportant une cuve 2 à l'intérieur de laquelle est placé le cœur du réacteur, un circuit primaire 3 dont une seule boucle a été représentée, sur laquelle est disposé un générateur de vapeur 4, le pressuriseur 5 et une pompe primaire 6.

Le circuit primaire d'un réacteur nucléaire à eau sous pression comporte généralement trois ou quatre boucles, dans chacune desquelles la vaporisation de l'eau alimentaire, par l'eau primaire échauffée par le cœur du réacteur, est effectuée au niveau d'un générateur de vapeur.

Un dispositif de mise et de maintien en arrêt à froid du réacteur disposé à l'intérieur de l'enceinte est placé en dérivation sur le circuit primaire. Ce dispositif comporte une pompe 8 et un échangeur de chaleur 9 permettant le refroidissement de l'eau primaire envoyée dans le circuit de refroidissement par ouverture de vannes 10.

Un circuit d'injection de sécurité 12 est disposé partiellement à l'extérieur de l'enceinte et comporte des pompes telles que 14 pour l'injection de l'eau du réservoir des piscines 15 ou de l'eau récupérée dans le puisard 16 de l'enceinte du réacteur, à l'intérieur du circuit primaire, en cas de manque d'eau dans ce circuit.

A l'extérieur de l'enceinte de sécurité, dans le bâtiment des auxiliaires nucléaires, est également disposé un ensemble 20 permettant le contrôle chimique et volumétrique de l'eau du circuit primaire. En particulier, un ensemble 23 permet de régler la teneur en acide borique de l'eau du circuit primaire intervenant dans le contrôle de réactivité du réacteur.

La salle de commande de la centrale permet la commande du réacteur et la surveillance des divers organes et circuits constituant cette centrale.

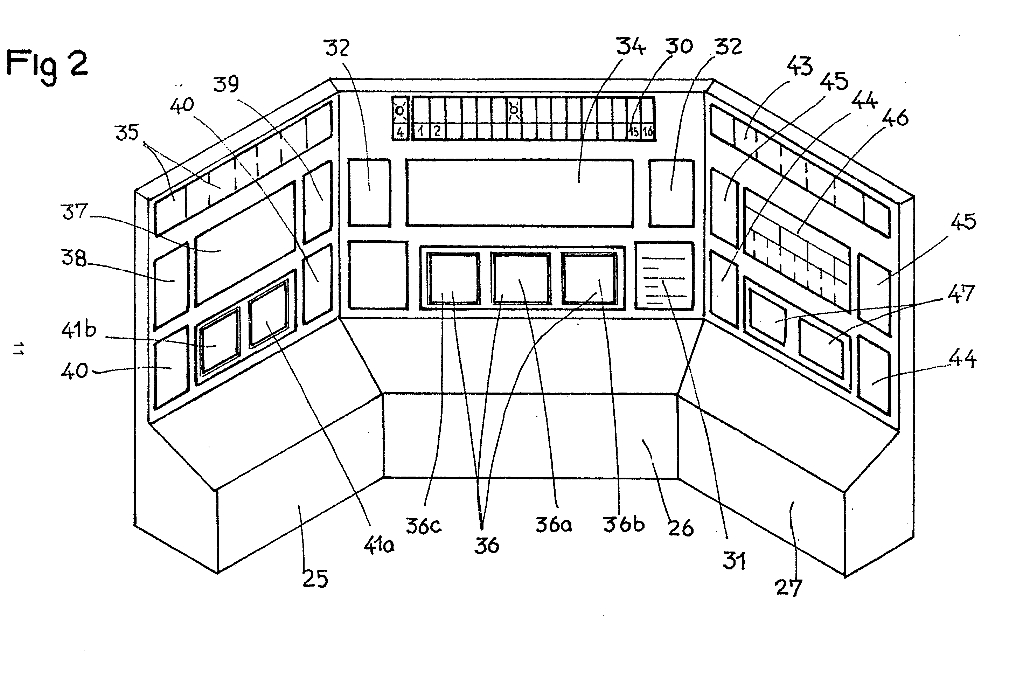

Dans cette salle de commande de la centrale, est disposé un pupitre de commande et de surveillance tel que représenté à la fig. 2.

Un tel ensemble permet, en particulier, la surveillance des divers organes et systèmes permettant d'assurer la conduite du réacteur et de toute la centrale sinsi que la sécurité de l'ensemble, en particulier, de la partie nucléaire de la centrale.

Ainsi qu'il est visible à la fig. 2, le pupitre de commande et de surveillance est constitué de trois parties distinctes 25, 26 et 27. Chacune des parties 25, 26 et 27 porte un plateau de commande, à sa partie inférieure, à partir duquel l'opérateur peut agir sur les éléments de la centrale et des moyens d'affichage à sa partie supérieure permettant la surveillance et le contrôle des opérations en cours.

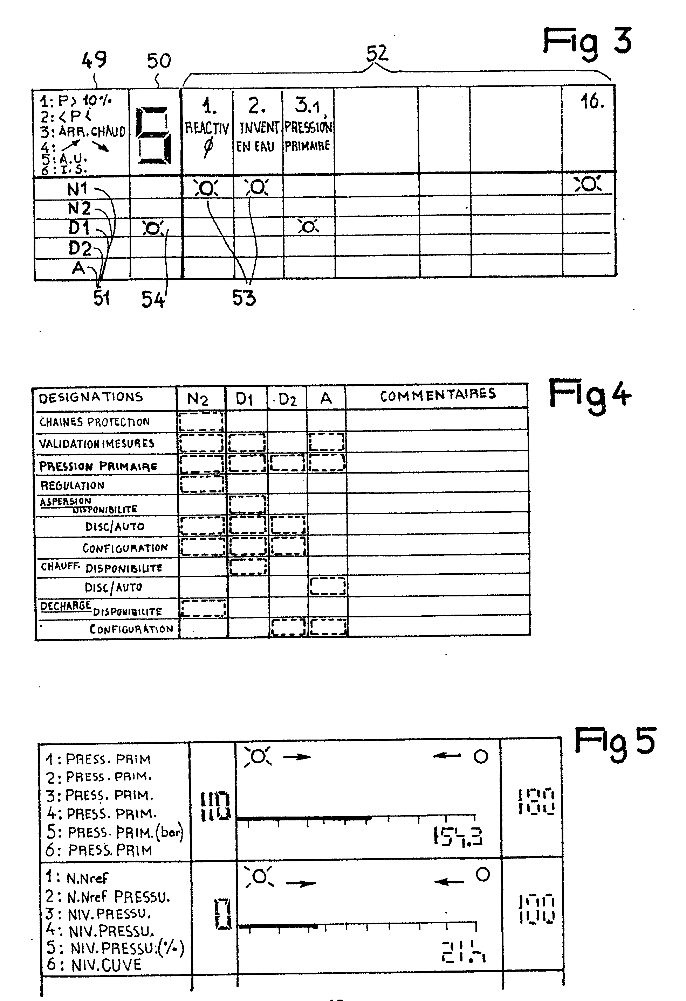

La partie centrale 26 constitue la zone de conduite générale du poste de commande et comporte les moyens les plus importants pour la surveillance de la centrale. En particulier, cette zone de conduite générale comporte un tableau d'affichage 30 dont le détail est visible à la fig. 3, permettant de visualiser de façon très claire, grâce à des voyants, l'état des différentes fonctions placées sous surveillance et l'état général de la situation du réacteur.

Cette zone 26 comporte également un tableau 31 dont le détail est visible à la fig. 5 permettant la visualisation de l'état et de l'évolution des paramètres principaux dont la connaissance est nécessaire à l'opérateur dans la situation de la centrale.

Des enregistreurs 32 permettent de connaître l'historique des paramètres principaux.

Un synoptique général 34 permet la visualisation de l'état des principaux éléments d'actionnement de la centrale (tels que vannes et pompes).

Enfin, des écrans 36 permettent l'affichage, soit automatiquement, soit par demande de l'opérateur, de renseignements particuliers tels que la liste des paramètres conduisant à une modification de l'état de la situation ou des fonctions de la centrale.

La fig. 4 représente une image s'affichant automatiquement sur l'écran 36b, dans le cas où la fonction 31 «contrôle de la pression primaire» a subi un changement d'état.

La zone 25 du pupitre de commande ou zone d'analyse comporte un ensemble d'alarmes 35 relatives à des composants des systèmes de sécurité du réacteur. Un synoptique 37 permet l'affichage de l'état des fonction et de protection et de sauvegarde du réacteur.

Un tableau 38 permet de visualiser l'état et l'évolution des principaux paramètres de sûreté du réacteur. Un tableau 39 permet l'affichage de l'état de disponibilité des différents systèmes de sauvegarde du réacteur et un tableau 40 permet l'affichage de l'état des différentes marges par rapport au seuil d'arrêt d'urgence ou d'injection de sécurité dans le réacteur nucléaire. Un écran 41a permet de déterminer de façon prévisionnelle l'effet qu'aurait un changement de situation du réacteur sur l'état des paramètres, des fonctions et de la situation, en gardant les informations relatives aux paramètres, du moment où l'on effectue la prévision. Un écran 41b permet d'obtenir automatiquement, lors d'un changement de situation, des informations relatives aux paramètres principaux dans la situation antérieure au changement.

La partie 27 du pupitre de commande ou zone de conduite des matériels comporte un ensemble d'alarmes 43 correspondant à chacun des éléments ou matériels de la centrale placés sous surveillance, des panneaux de visualisation 44 de l'état et de la tendance des principaux paramètres liés à des matériels importants tels que la turbine et les pompes primaires par exemple, des tableaux 45 permettant la visualisation de l'historique de ces paramètres liés à des matériels importants ainsi qu'un synoptique 46 permettant l'affichage de l'état des matériels regroupés par sous-ensembles tels que circuit primaire ou circuit de contrôle chimique et volumétrique du fluide primaire.

Enfin deux écrans 47 permettent l'affichage automatique ou à la demande de l'opérateur d'indications sur les défauts présentés par les matériels et en particulier par les matériels faisant l'objet d'une alarme indiquée par l'un des voyants 43 de la zone de conduite des matériels.

Sur la fig. 3, on voit en détail le tableau 30 permettant l'affichage de la situation du réacteur dans la case 50, suivant une codification indiquée dans la case 49. Les six situations répertoriées sont les suivantes:

1. réacteur en fonctionnement à une certaine puissance supérieure à 10% de la puissance nominale,

2. réacteur en fonctionnement à une puissance comprise entre une puissance très faible et 10% de la puissance nominale,

3. réacteur à l'arrêt, en attente à chaud,

4. installation en période de démarrage-arrêt,

5. arrêt d'urgence du réacteur,

6. injection de sécurité dans le circuit primaire du réacteur.

Le chiffre 5 affiché dans la case 50 indique que le réacteur a subi un arrêt d'urgence, par retombée de toutes les barres de commande en position d'insertion maximum dans le cœur.

Les cases 51 indiquent les différents états retenus pour caractériser les diverses fonctions mentionnées dans les cases 52.

Cinq états différents ont été retenus: deux états normaux N1 et N2, deux états défectueux D1 et D2 et un état anormal.

Seize fonctions ont été répertoriées, chacune de ces fonctions regroupant un certain nombre de paramètres traduisant l'état des matériels ou la valeur des grandeurs physiques dont la surveillance est nécessaire pour s'assurer de la possibilité de mise en œuvre de la fonction.

Les différentes fonctions retenues sont indiquées dans le tableau ci-dessous, les numéros de ces fonctions se retrouvant dans les cases 52 du tableau de la fig. 3.

| N° de la fonction | Libellé de la fonction | N° de la fonction | Libellé de la fonction |
|---|---|---|---|
| 1 | Contrôle Réactivité / Flux | 2 | Inventaire en eau |
| 3 | Refroidissement du cœur | 3.1 | Contrôle pression primaire |
| 3.2 | Contrôle température primaire | 4 | Evacuation de l'énergie primaire |
| 5 | Intégrité du circuit primaire | 6 | Intégrité de l'enceinte |
| 7 | Contrôle des conditions d'ambiance dans l'enceinte | 8 | Chimie des eaux |
| 9 | Production et évacuation d'énergie électrique | 10 | Vide au condenseur |
| 11 | Fourniture d'eau alimentaire | 12 | Purges et réchauffage du secondaire |
| 13 | Traitement - contrôle rejets radio-actifs | 14 | Etat opérationnel des auxiliaires généraux |
| 15 | Disponibilité des circuits de sauvegarde | 16 | Réglementations administratives |

Les voyants lumineux 53 permettent d'indiquer à l'opérateur de façon très simple l'état de chacune des fonctions suivant la codification retenue.

Des éléments logiques permettent de déterminer l'état de la fonction à partir de l'état des différents paramètres, comme l'état le plus défavorable enregistré pour l'un quelconque des paramètres.

Par exemple, sur la fig. 3, on a attribué à la fonction 3.1 contrôle de la pression primaire, l'état D1, l'un au moins des paramètres de cette fonction ayant un état D1 dans la situation 5, c'est-à-dire arrêt d'urgence du réacteur, et aucun paramètre de cette fonction 3.1 n'ayant un état plus défavorable.

Si aucune autre fonction n'a un état plus défavorable que D1, on attribue à la situation 5, arrêt d'urgence du réacteur, un état D1 qui est celui de la fonction ayant l'état le plus défavorable, apparaissant dans la case 54.

Le tableau tel que représenté à la fig. 3 permet à l'opérateur d'avoir une vision très rapide de l'état global de la situation du réacteur et de l'état de chacune des fonctions répertoriées.

Si l'on prend comme exemple la fonction 3.1

contrôle de la pression du circuit primaire, l'un des paramètres principaux de cette fonction est le paramètre physique «pression dans le circuit primaire» et l'on déterminera l'état de ce paramètre par comparaison de la valeur de la pression mesurée par les capteurs avec des valeurs de seuils déterminées en fonction des spécifications actuelles concernant cette pression primaire.

C'est ainsi qu'un état normal du paramètre dans la situation 1 sera enregistré si cette pression est comprise entre 151 et 160 bars. Ces deux valeurs de seuil correspondent au niveau des alarmes dans les systèmes de surveillance actuels.

Un état dégradé du paramètre sera enregistré si la pression est comprise entre 130 et 151 bars ou entre 160 et 164 bars. Ces deux valeurs limites correspondent aux seuils d'arrêt d'urgence du réacteur.

Enfin, si la pression est inférieure à 130 bars ou supérieure à 164 bars, on enregistrera un état anormal du paramètre.

Si l'on était parti de la situation 1 correspondant à un fonctionnement en puissance du réacteur, on aboutit à la situation 5, soit la situation correspondant au réacteur après arrêt d'urgence. Dans cette nouvelle situation, les valeurs des seuils de la pression seront différentes.

On voit ainsi qu'on substitue à un système de surveillance uniquement par alarmes, un système de surveillance avec indication de l'état de dégradation de la fonction et de la situation du réacteur.

En dehors du paramètre physique principal, dans le cas de la fonction de contrôle de la pression du circuit primaire, il est nécessaire de déterminer l'état de tous les paramètres décrivant la disponibilité des systèmes concourant à assurer la fonction.

Ces systèmes sont relatifs, par exemple, à la régulation de la pression primaire dans le pressuriseur, et, dans ce cas, les paramètres à considérer sont relatifs à l'état des éléments de chauffage de ce pressuriseur et du système d'aspersion.

Tous les éléments concourant à déterminer l'état de disponibilité de ces systèmes sont pris en compte pour la détermination de l'état de la fonction.

Il est à noter que l'état des différents paramètres peut être attribué différemment suivant la situation du réacteur. Par exemple, dans le cas de la fonction contrôle de la pression primaire, en cas de fonctionnement du réacteur en puissance, si deux lignes de décharge du pressuriseur sont indisponibles, on doit déclarer la situation anormale. En revanche, dans le cas de la situation après arrêt d'urgence, (5), le fait d'avoir deux lignes de décharge du pressuriseur indisponibles n'entraîne pas pour autant une situation anormale mais une situation uniquement dégradée.

Cela résulte d'une analyse précise des spécifications techniques relatives à la conduite de la centrale se retrouvant au niveau de la logique permettant l'affichage de l'état des fonctions résultant de l'état des paramètres.

Sur la fig. 4, on voit l'image qui apparaît automatiquement sur l'écran 36b, dans le cas où la fonction 3.1 «contrôle de la pression primaire» subit un changement d'état. Les paramètres de la fonction apparaissent en première colonne sous l'indication «designations», leur état apparaît sous forme de signaux lumineux dans les zones rectangulaires représentées sur la fig. 4 par des pointillés. Si nous supposons que la fonction «contrôle de la pression primaire» passe à un état D1 comme représenté sur la fig. 3, le voyant 53 correspondant sur le dispositif d'affichage 30 se met à clignoter, puis l'image de la fig. 4 apparaît sur l'écran 36b. Le voyant 53 reste allumé mais cesse de clignoter.

Un signal lumineux clignotant apparaît en face du paramètre responsable du changement d'état de la fonction, dans la colonne D1. L'opérateur est ainsi averti que le changement d'état de la fonction est imputable à ce paramètre.

Si un second paramètre passe à un état D1, un signal lumineux clignotant s'inscrit en face de ce paramètre dans la colonne D1 cependant que le signal lumineux du premier paramètre cesse de clignoter.

L'état des différents paramètres est indiqué sur l'image apparaissant sur l'écran 36b et représentée à la fig. 4, par un signal lumineux fixe dans la colonne correspondante.

Sur l'écran 36a, l'opérateur peut faire apparaître, à la demande, les indications relatives aux paramètres d'autres fonctions.

Les écrans 36 permettent donc une analyse plus précise des causes d'un changement d'état de la situation ou d'une fonction.

Sur la fig. 5 on voit une partie du tableau 31 permettant de visualiser l'état et la tendance (accroissement ou diminution) des paramètres principaux.

Les deux paramètres principaux qui ont été représentés sur la fig. 4 sont la pression du circuit primaire et le niveau d'eau dans le pressuriseur mais il en existe d'autres représentatifs des autres fonctions.

Un voyant lumineux permet d'indiquer la tendance du paramètre physique (dans les deux cas la tendance est à l'accroissement) et la valeur numérique du paramètre et son amplitude sur une échelle dont les valeurs extrêmes sont indiquées. Ces amplitudes sont adaptées à la valeur du paramètre de la situation considérée.

On fournit ainsi à l'opérateur une vision très claire et très rapide des paramètres à surveiller.

Les différents paramètres ou systèmes envisagés pour la détermination de l'état de la fonction donnent lieu d'autre part à des affichages sur les tableaux spécialisés qui ont été décrits à propos de la fig. 2.

Un des principaux avantages de l'invention réside dans une visualisation très rapide et très synthétique de l'état du réacteur dans la situation considérée et de l'état de chacune des fonctions qu'il faut assurer.

Il est bien évident que l'invention ne se limite pas au mode de réalisation qui a été décrit. C'est ainsi qu'on peut imaginer l'utilisation et la définition de fonctions différentes de celles qui ont été énumérées, qu'on peut envisager d'autres affichages que ceux qui ont été décrits et des états différents de ceux qui ont été énumérés, à partir du moment où l'indication de ces états à l'opérateur lui permet d'avoir une vision exacte de la situation du réacteur et des différentes fonctions, pour lui permettre de prendre très rapidement une décision concernant la conduite du réacteur.

Enfin, le procédé suivant l'invention est utilisable non seulement dans le cas d'une centrale de production d'électricité équipée d'un réacteur nucléaire à eau sous pression mais également dans le cas de toute centrale de production d'électricité équipée d'un réacteur nucléaire d'un type quelconque.

## Revendications

1. Procédé de surveillance d'une centrale de production d'électricité équipée d'un réacteur nucléaire consistant à recueillir des informations quantitatives ou qualitatives appelées «paramètres», relatives au fonctionnement et à l'état des composants de la centrale, à comparer ces paramètres à des données de référence correspondant à un fonctionnement normal et à signaler les difffé-rences existant entre les paramètres et les données de références, caractérisé par le fait:

— qu'on définit un ensemble de situations prédéterminées correspondant aux différentes phases de fonctionnement ou d'arrêt du réacteur en fonction du niveau de la puissance dégagée par le cœur, des paramètres physiques du fluide primaire et de leur évolution dans le temps, ou des demandes d'actions relatives à la protection ou à la sauvegarde du réacteur,

— qu'on définit à chaque instant le type de fonctionnement du réacteur par son rattachement à l'une des situations prédéterminées,

— qu'on regroupe les paramètres utiles pour la surveillance de la centrale en sous-ensembles appelés «fonctions», correspondant chacun aux paramètres et conditions relatifs à l'accomplissement d'une tâche particulière et indispensable dans la centrale,

— qu'on détermine pour chacun des paramètres de chacune des fonctions son état, suivant une catégorie prédéterminée décrivant son aptitude à concourir à l'accomplissement de la fonction dans la situation considérée et représentant un niveau de dégradation par rapport à un fonctionnement normal suivant des spécifications prédéterminées,

— qu'on attribue à chacune des fonctions considérées l'état le plus défavorable attribué à l'un au moins des paramètres de cette fonction,

— qu'on détermine l'état global de la situation comme l'état le plus défavorable attribué à l'une au moins des fonctions,

— qu'on visualise les informations relatives à l'état global de la situation, à l'état de chacune des fonctions et à tout changement d'état d'une quelconque de ces fonctions.

2. Procédé de surveillance suivant la revendication 1, caractérisé par le fait qu'on visualise les informations relatives à certains paramètres particulièrement représentatifs des fonctions, dans la situation considérée.

3. Procédé de surveillance d'une centrale suivant la revendication 1, caractérisé par le fait qu'on visualise les informations relatives à l'état des matériels nécessaires pour l'accomplissement des fonctions et pour la mise en œuvre des systèmes de sécurité et de sauvegarde du réacteur.

4. Procédé de surveillance d'une centrale suivant la revendication 1, caractérisé par le fait qu'on visualise les informations relatives à la disponibilité des systèmes de sécurité et de sauvegarde du réacteur.

## Patentansprüche

1. Verfahren zur Überwachung eines mit einem Kernreaktor ausgerüsteten Kraftwerks, bestehend aus Sammeln von quantitativen oder qualitativen Informationen oder „Parametern" bezüglich des Betriebs und des Zustands der Komponenten des Kraftwerks, aus Vergleichen dieser Parameter mit einem normalen Betrieb entsprechenden Bezugsgrössen und aus Anzeigen der zwischen den Parametern und den Bezugsgrössen bestehenden Unterschiede, gekennzeichnet durch Definieren einer Anzahl von gegebenen Situationen entsprechend den unterschiedlichen Betriebs- oder Stillstandsphasen des Reaktors in Abhängigkeit vom Niveau der vom Reaktorkern freigesetzten Leistung, von physikalischen Parametern des Primärfluids und deren Entwicklung über der Zeit und von Anforderungen von Aktionen bezüglich des Schutzes und der Erhaltung des Reaktors,

— durch in jedem Augenblick erfolgendes Definieren der Betriebsart des Reaktors durch deren Verknüpfung mit einer der vorhergehenden Situationen,

— durch Neugruppieren der Parameter, die für die Überwachung des Kraftwerks in Unteranordnungen, genannt „Funktionen", von Nutzen sind, entsprechend den Parametern oder den Bedingungen bezüglich der Erfüllung einer speziellen und im Kraftwerk unerlässlichen Aufgabe,

— durch Bestimmen des Zustands jedes der Parameter jeder der Funktionen gemäss einer gegebenen Kategorie, die seine Eignung beschreibt, bei der Durchführung der Funktion in der betrachteten Situation beizutragen, und die ein Verschlechterungsniveau bezüglich eines normalen Betriebs gemäss gegebenen Spezifikationen darstellt,

— durch jeder der betrachteten Funktionen erfolgendes Zuordnen des ungünstigsten Zustands, der wenigstens einem der Parameter dieser Funktion zugeordnet ist,

— durch Bestimmen des Gesamtzustands der Situation als dem ungünstigsten Zustand, der wenigstens einer der Funktionen zugeordnet ist,

— durch Anzeigen der Informationen bezüglich des Gesamtzustands der Situation, des Zustands jeder der Funktionen und jeder Änderung des Zustands einer beliebigen dieser Funktionen.

2. Überwachungsverfahren nach Anspruch 1, gekennzeichnet durch Anzeigen der Informationen bezüglich gewisser besonders repräsentativer Parameter der Funktionen in der betrachteten Situation.

3. Verfahren zur Überwachung eines Kraftwerks nach Anspruch 1, gekennzeichnet durch Anzeigen der Information bezüglich des Zustands der Geräte, die zur Ausführung der Funktionen und zur Inbetriebsetzung des Systems für die Sicherheit und die Erhaltung des Reaktors notwendig sind.

4. Verfahren zur Überwachung eines Kraftwerks nach Anspruch 1, gekennzeichnet durch Anzeigen der Informationen bezüglich der Verfügbarkeit des Systems für die Sicherung und Erhaltung des Reaktors.

## Claims

1. Method of monitoring an electricity generating station equipped with a nuclear reactor, involving gathering quantitative or qualitative information, called "parameters", relating to the operation and to the state of the components of the power station, comparing these parameters with reference data corresponding to a normal operation, and signalling the differences existing between the parameters and the reference data, characterised in that:

— a number of predetermined situations corresponding to the various phases of operation or shutdown of the reactor is defined as a function of the level of the power emitted by the core, the physical parameters of the primary fluid and their variation with time or the needs for action relating to the protection or safeguard of the reactor,

— the type of operation of the reactor is defined at each moment by linking it to one of the predetermined situations,

— the useful parameters for monitoring the power station are grouped into sub-assemblies called "functions", each corresponding to the parameters and conditions relating to the performance of a particular and indispensable task in the power station,

— the state of each of the parameters of each of the functions is determined according to a predetermined category describing its suitability for contributing to performing the function in the situation in question and representing a level of deterioration in relation to normal operation according to predetermined specifications,

— the most unfavorable state allocated to at least one of the parameters of this function is allocated to each of the considered functions,

— the overall state of the situation is determined as being the most unfavorable state allocated to at least one of the functions,

— the information relating to the overall state of the situation, to the state of each of the functions and to any change of state in any one of these functions is displayed.

2. Monitoring method according to claim 1, characterised in that the information relating to certain parameters particularly representative of the functions, in the considered situation, is displayed.

3. Method of monitoring a power station according to claim 1, characterised in that the information relating to the state of the items of equipment necessary for performing the functions and for putting into effect the safety and safeguard systems of the reactor is displayed.

4. Method of monitoring a power station according to claim 1, characterised in that the information relating to the availability of the safety and safeguard systems of the reactor is displayed.

Fig 1

# Fig 2

0 083 546

**Fig 3**

| | | 1. REACTIV ∅ | 2. INVENT EN EAU | 3.1 PRESSION PRIMAIRE | | | | 16. |
|---|---|---|---|---|---|---|---|---|
| 1: P > 10% <br> 2: < P < <br> 3: ARR. CHAUD <br> 4: <br> 5: A.U. <br> 6: I.S. | 8 | | | | | | | |
| N1 | | :O: | :O: | | | | | :O: |
| N2 | | | | | | | | |
| D1 | :O: | | :O: | | | | | |
| D2 | | | | | | | | |
| A | | | | | | | | |

49  50  52  51  54  53

**Fig 4**

| DESIGNATIONS | N₂ | D₁ | D₂ | A | COMMENTAIRES |
|---|---|---|---|---|---|
| CHAINES PROTECTION | ☐ | | | | |
| VALIDATION MESURES | ☐ | ☐ | | ☐ | |
| PRESSION PRIMAIRE | ☐ | ☐ | ☐ | ☐ | |
| REGULATION | ☐ | | | | |
| ASPERSION DISPONIBILITE | | ☐ | | | |
| DISC/AUTO | ☐ | ☐ | ☐ | | |
| CONFIGURATION | ☐ | ☐ | ☐ | | |
| CHAUFF. DISPONIBILITE | | ☐ | | | |
| DISC/AUTO | | | | ☐ | |
| DECHARGE DISPONIBILITE | ☐ | | | | |
| CONFIGURATION | | | ☐ | ☐ | |

**Fig 5**

| 1: PRESS. PRIM <br> 2: PRESS. PRIM. <br> 3: PRESS. PRIM. <br> 4: PRESS. PRIM. <br> 5: PRESS. PRIM.(bar) <br> 6: PRESS. PRIM | 110 | :O: →    ← O <br> 154.3 | 130 |
|---|---|---|---|
| 1: N.Nref <br> 2: N.Nref PRESSU. <br> 3: NIV.PRESSU. <br> 4: NIV.PRESSU. <br> 5: NIV.PRESSU.(%) <br> 6: NIV.CUVE | 0 | :O: →    ← O <br> 21.5 | 100 |